# FASCICULE DE BREVET EUROPEEN

(11) **EP 2 061 343 B1**
(45) Date de publication et mention de la délivrance du brevet: **27.03.2013**
(21) Numéro de dépôt: 07823782.3
(22) Date de dépôt: 06.09.2007
(51) Int. Cl.: A21D 13/08, A23L 1/0522, A23G 1/56, A23L 1/00, A21D 13/00, A23G 1/30

(54) **FOURRAGES**
FÜLLUNGEN
FILLINGS

(30) Priorité: 11.09.2006 FR 0607936
(43) Date de publication de la demande: 27.05.2009
(73) Titulaire: Kraft Foods Global Brands LLC, Northfield, IL 60093 (US)
(72) Inventeur: RABAULT, Jean-Luc, 78730 Ponthevrard (FR); BELOUIN, François, 91590 Cerny (FR)
(74) Mandataire: Cabinet Plasseraud
(86) Numéro de dépôt international: PCT/FR2007/051886
(87) Numéro de publication internationale: WO 2008/031972

(56) Documents cités:
- EP-A- 1 369 041
- EP-A1- 1 287 748
- WO-A-02/44279
- DE-A1- 3 726 577
- DE-C1- 19 616 210
- US-A- 4 518 622
- US-A- 4 670 272
- US-A1- 2002 090 446
- US-A1- 2005 091 716
- US-A1- 2006 008 575
- US-B1- 6 221 420

## Description

La présente invention concerne un produit de cuisson céréalier comportant un fourrage constitué d'une phase aqueuse continue, ledit fourrage ayant une activité de l'eau (Aw) de 0,5 à 0,8 et une teneur en matières grasses de moins de 25 % en poids par rapport au poids total du fourrage et comprenant au moins une poudre d'amidon non gélatinisé natif ou surséché, au moins 5 % des particules dudit amidon non gélatinisé ayant une taille de particule supérieure ou égale à 10 µm.

La réduction de la teneur en matières grasses (MG) et en sucres dans les produits alimentaires, tout en conservant leurs propriétés organoleptiques et leur texture, est un défi majeur de l'industrie agroalimentaire. Notamment dans le domaine des biscuits et gâteaux avec fourrage à phase aqueuse continue la réduction de la teneur en matière grasse et en sucres s'avère difficile. Cependant, une telle réduction est très désirable pour la lutte contre l'obésité.

Les biscuits et gâteaux fourrés sont généralement très appréciés par les consommateurs, mais ces produits sont souvent riches en calories et nutritionnellement déséquilibrés, notamment à cause d'une proportion trop importante des calories provenant des matières grasses et des sucres.

Pour pallier à ces inconvénients, différents biscuits et gâteaux fourrés allégés en matières grasses et/ou en sucres ont été proposés. Ces produits allégés ont souvent un pouvoir rassasiant plus faible que les biscuits et gâteaux fourrés traditionnels et entraînent donc souvent une sensation de faim immédiate ou différée. Par conséquent, le consommateur mange souvent soit une quantité plus élevée de ces produits allégés par rapport aux produits correspondants traditionnels, soit autre chose en plus du produit allégé. L'effet de l'apport calorique plus faible du produit allégé est ainsi contrebalancé par l'apport calorique supplémentaire.

Ainsi, l'ajout de protéines a été proposé. Cependant, celles-ci confèrent une texture collante au produit si elles sont utilisées à forte concentration et, de plus, elles coûtent chères. L'ajout de fibres solubles et insolubles a également été proposé. Toutefois, ces solutions présentent nombreux inconvénients. Il est vrai que les fibres solubles augmentent la satiété, mais leur utilisation est souvent liée à des troubles digestifs tels qu'un ballonnement, des flatulences ou un transit accéléré. Les fibres insolubles provoquent en général des irritations au niveau des intestins et ne sont pas toujours acceptables au niveau organoléptique. Les polyols sont souvent utilisés pour remplacer tout ou partie des sucres dans des produits à saveur sucrée. Mais leur utilisation présente également de nombreux inconvénients, tels que leur prix élevé, le fait que leur utilisation n'est pas conseillée pour les enfants et les mêmes troubles digestifs que les fibres solubles et une mauvaise image auprès des consommateurs.

Il est connu d'ajouter de l'amidon qui est gélatinisé, soit par la mise en oeuvre d'un amidon pré-gelatinisé, soit le plus souvent par la cuisson d'un amidon natif en cours du procédé de fabrication, notamment pendant la pasteurisation ou la stérilisation, en tant qu'épaississant (agent de texture) dans des fourrages.

La demande de brevet US 2006/008575 décrit des compositions de glaçage comprenant de l'eau comme phase aqueuse continue et entre 4,5 et 5% d'amidon utilisé en tant qu'agent augmentant la viscosité.

Le brevet US 5 900 066 décrit un procédé pour préparer de la nourriture avec de l'amidon prégélatinisé qui est formé à une pression comprise entre 350 et 700 MPa et à une température comprise entre -5 et 45°C.

Le brevet US 4 670 272 décrit des crèmes thermostables de longue conservation et ayant une Aw comprise entre 0,6 et 0,7, comprenant un hydrocolloïde, du sirop de maïs, de l'amidon modifié et de l'albumine. La dispersion est ensuite aérée puis cuite à une température comprise entre 60 et 80°C.

Le brevet US 6 221 420 décrit des fourrages comprenant de l'amidon non-gélatinisé, ledit fourrage étant cuit à une température comprise entre 85 et 88°C puis introduit dans une boite de conserve qui est chauffée dans un autoclave avec de la vapeur jusqu'à ce que la température interne du fourrage atteigne 93°C.

Le brevet EP 1 369 041 décrit des substituts de gélatine comprenant de l'amidon. Lesdits substituts de gélatine sont incorporés dans un produit alimentaire qui est subséquemment chauffé à une température autour de 90°C.

La demande de brevet US 2005/091716 décrit un nouveau type d'amidon issu de plantes transgéniques, ledit amidon pouvant être gélatinisé puis incorporé dans des produits alimentaires en tant qu'épaississant.

Le brevet DE 3 726 577 décrit des pâtes à pâtisserie crues à longue conservation ayant une activité de l'eau Aw comprise entre 0,6 et 0.8, 30 à 40% de farine, 13 à 20% d'amidon natif, 15 à 25% de graisses et 15 à 25% de sucre.

L'article de Paterson, J.L.; Hardacre, A.; Li, P.; Rao, M.A. Food Hydrocolloids, vol. 15, 2001, pp 453-459 décrit que l'amidion natif de mais a une granulomérie comprise entre 5 et 25 µm.

La demande de brevet US 2002/090446 décrit de l'amidon de pomme de terre waxy modifié chimiquement. Ledit amidon étant incorporé dans des compositions alimentaires en tant qu'épaississant.

Le brevet EP 1 671 549 décrit une méthode d'amélioration de la performance physique ou de la récupération chez un être humain par administration d'une composition alimentaire contenant des sucres lents tels que l'amidon de maïs non cuit.

Le brevet US 4 456 625 décrit des produits de boulangerie cuits, prêts-à-consommer et de longue conservation qui contiennent une part importante d'amidon non-gélatinisé.

Le brevet FR 2 847 770 décrit des compositions concentrées fluides, stables à la conservation, comprenant de l'amidon non gélatinisé, utilisées en tant que sauces, soupes ou jus.

De plus, l'amidon natif gélatinisé présente une rétrogradation dans le temps, surtout pour les produits très peu humides, ce qui conduit à une modification de texture, notamment une synérèse. Pour éviter ce phénomène, l'amidon est parfois modifié chimiquement ou physiquement.

Cependant, la modification réduit fortement l'intérêt de l'amidon pour le consommateur, car un tel amidon est perçu comme un additif et non comme un ingrédient naturel.

De plus, la cuisson, sous l'effet de l'hydratation et la chaleur, a pour effet d'augmenter l'indice glycémique d'un aliment. La carotte par exemple a un indice glycémique de 35 quand elle est crue. Dès qu'elle est bouillie dans l'eau son indice glycémique monte à 85 du fait de la gélatinisation de son amidon. Une alimentation riche en aliments ayant un indice glycémique élevé n'est notamment pas en ligne avec les recommandations des nutritionnistes qui préconisent des aliments ayant un indice glycémique bas.

Un but de la présente invention est donc de pallier tout ou partie des inconvénients cités ci-dessus et notamment de proposer des produits de cuisson céréaliers plus en ligne avec les recommandations des nutritionnistes qui préconisent de réduire les calories ayant pour origine les graisses ou les sucres et d'augmenter la part des calories provenant des glucides complexes.

Un autre but est de proposer des produits de cuisson céréaliers avec un pouvoir rassasiant plus élevé et/ou plus prolongé que les produits de cuisson céréaliers de l'art antérieur.

A cette fin, la présente invention propose un produit de cuisson céréalier comportant un fourrage constitué d'une phase aqueuse continue qui a une activité de l'eau (Aw) de 0,5 à 0,8 et une teneur en matières grasses de moins de 25 % en poids par rapport au poids total du fourrage, une teneur en sucres de 0 à 50% en poids par rapport au poids total du fourrage et qui comprend 4 à 40% en poids par rapport au poids total du fourrage d'au moins une poudre d'amidon non gélatinisé natif ou surséché, au moins 5 % des particules dudit amidon non gélatinisé ayant une taille de particule supérieure ou égale à 10 µm, l'amidon non gélatinisé ayant, pour au moins 90% des particules, une granulométrie comprise entre 2 µm et 100 µm, et ledit amidon n'étant pas chauffé au dessus de sa température de gélatinisation lors de l'utilisation ultérieure du fourrage.

L'homme de l'art connait différentes techniques pour reconnaitre l'amidon non gélatinisé ; la plus simple est l'observation au microscope en lumière polarisée : les grains non gélatinisés apparaissent sous forme de « croix de malte » (bi-réfringence), alors que les grains gélatinisés perdent cette caractéristique.

Le fourrage selon l'invention peut être un fourrage de saveur sucrée, tel qu'un fourrage saveur chocolat, vanille, lait, caramel, café, noisette, menthe ou fruit ou un fourrage de saveur salée, tel que fromage, viande, poisson, épices, légumes.

L'activité de l'eau (Aw) d'un matériau se définit comme le rapport entre la pression de vapeur de l'eau du matériau et la pression de vapeur d'eau pure à la même température. Cette notion est bien connue de l'homme du métier qui connaît parfaitement les méthodes de mesure adaptées. Dans la plupart des cas l'activité de l'eau n'est pas proportionnelle à la teneur en eau du matériau. Ainsi, l'activité de l'eau (Aw) d'un yoghourt aux fruits ayant une teneur en eau de 82% en poids est par exemple de 0,99, tandis que le beurre, qui a également une activité de l'eau de 0,99, a une teneur en eau de 16 % en poids. Par convention, nous mesurons toutes les Aw dans la présente invention à 25°C, et 24H à 3 jours après la fabrication des recettes.

L'activité de l'eau du fourrage selon l'invention est généralement de 0,5 à 0,8. Dans un mode de réalisation l'Aw du fourrage selon l'invention est avantageusement de 0,65 à 0,75, de préférence de 0,68 à 0,72. Ces fourrages selon l'invention conviennent, dans leur emballage, à un stockage à une température comprise entre 15 et 25°C pendant au moins une semaine, de préférence pendant au moins un mois.

Avantageusement, la teneur en matière sèche des fourrages selon l'invention est inférieure à 80 %, de préférence inférieure à 70 %, et plus préférentiellement encore inférieure à 60 % en poids.

La Demanderesse a eu le mérite de trouver qu'il était possible d'améliorer la composition nutritionnelle et d'augmenter le pouvoir rassasiant des fourrages constitués d'une phase aqueuse continue et d'améliorer leur composition nutritionnelle conformément aux recommandations des nutritionnistes, par l'ajout d'au moins une poudre d'amidon non gélatinisé natif ou surséché ayant, pour au moins 5 % des particules une taille de particule supérieure ou égale à 10 µm, ayant pour au moins 90% des particules, une granulométrie comprise entre 2µm et 100µm, et ledit amidon n'étant pas chauffé au dessus de sa température de gélatinisation lors de l'utilisation ultérieure du fourrage. En fait, par l'ajout dudit amidon, on augmente le ratio (calories apportées par les glucides lentement digestibles)/(teneur totale en calories), ce qui retarde l'apparition d'une sensation de faim après consommation d'un fourrage selon l'invention.

L'ajout d'une poudre d'amidon non gélatinisé ne permet pas seulement d'augmenter le ratio (calories apportées par les glucides lentement digestibles)/(teneur totale en calories), mais aussi de réduire la teneur en sucres et/ou en matière grasse des fourrages. Selon la présente invention, il est ainsi possible de fournir des fourrages allégés en sucres, notamment en saccharose, qui possèdent un pouvoir rassasiant plus élevé et/ou plus prolongé qu'un fourrage traditionnel, notamment allégé.

Selon la présente invention, il est ainsi possible de fournir des fourrages constitués d'une phase aqueuse continue allégés en matières grasses et/ou en sucres, qui possèdent un pouvoir rassasiant plus élevé et/ou plus prolongé qu'un fourrage à phase aqueuse continue allégé traditionnel.

Les fourrages selon l'invention ont une teneur en matières grasses inférieure à 25 % en poids par rapport au poids total du fourrage. De préférence, la teneur en matières grasses est de 0 à 25 %, de préférence de 0 à 21 %, avantageusement 0 à 15, et de préférence 5 à 15% en poids par rapport au poids total du fourrage.

A la différence des sucres, la poudre d'amidon non gélatinisé n'est pas sucrée et n'est pas soluble dans l'eau et il est donc surprenant que les fourrages selon l'invention présentent des caractéristiques organoleptiques semblables, voire meilleures, que les produits conventionnels très sucrés, souvent perçus comme brûlants en bouche et en arrière gorge.

Selon l'invention, tous les types d'amidons peuvent être utilisés dans le fourrage à condition qu'il s'agisse d'amidons non gélatinisés. Le terme « amidon non gélatinisé » veut dire que l'amidon n'est ni prégélatinisé, ni gélatinisé au cours du procédé de fabrication ou de préparation avant consommation. Bien entendu, on peut utiliser des mélanges d'amidons de différentes origines.

Les amidons pouvant être utilisés aux fins de la présente invention comprennent l'amidon de blé, l'amidon de riz, l'amidon de maïs, l'amidon de maïs waxy, l'amidon de sorgho, l'amidon de tapioca, l'amidon de pomme de terre, l'amidon de manioc et leurs mélanges.

Selon l'invention au moins 5 %, de préférence au moins 10 %, et plus préférentiellement encore au moins 15 % des particules de l'amidon non gélatinisé ont une taille de particule supérieure ou égale à 10 µm. De cette façon, on obtient un bon compromis entre l'augmentation de la viscosité du fourrage suite à l'ajout d'amidon non gélatinisé et l'augmentation du ratio (calories apportées par les glucides complexes)/(calories totales).

La taille des particules de l'amidon non gélatinisé est pour au moins 90 % des particules comprise entre 2 µm et 100 µm, de préférence entre 5 µm et 45 µm.

Selon l'invention, l'amidon non gélatinisé peut être un amidon natif. Contrairement aux amidons gélatinisés et à la plupart des autres hydrocolloïdes, dont les protéines et les maltodextrines, l'amidon natif présente en général une absorption d'eau faible. Par conséquent, l'ajout d'amidon natif dans un fourrage constitué d'une phase aqueuse continue ne provoque qu'une légère augmentation de viscosité, tandis que l'amidon gélatinisé ou les autres hydrocolloïdes précités provoqueront une augmentation importante de viscosité. L'utilisation d'amidon natif permet donc d'ajouter des quantités plus importantes d'amidon par rapport à l'amidon gélatinisé, tout en gardant une viscosité proche de celle du produit de départ.

De plus, l'amidon natif étant un produit naturel non modifié, il ne fait pas partie des additifs alimentaires, qui doivent être signalés en tant que tels sur l'emballage du produit commercialisé.

En outre, l'amidon natif ne présente pas d'inconvénients digestifs, contrairement aux polyols et aux fibres solubles qui ont, entre autres, un effet laxatif, ce qui est particulièrement indésirable dans des produits qui sont destinés aux enfants. Le fait qu'il soit non gélatinisé laisse l'amidon natif lentement digestible, ce qui permet d'augmenter le ratio (calories apportées par les glucides lentement digestibles)/(teneur totale en calories). Ainsi l'ajout d'amidon natif dans les fourrages selon l'invention entraîne une sensation de satiété prolongée par rapport aux fourrages constitués d'une phase aqueuse continue traditionnels, notamment par rapport aux fourrages constitués d'une phase aqueuse continue allégés en sucres et/ou en matières grasses. Et surtout, la répartition des calories est plus équilibrée entre glucides complexes, matière grasse et sucres, conformément aux recommandations des nutritionnistes.

En outre, la densité de l'amidon natif est élevée, ce qui limite l'encombrement stérique, et ses granules présentent peu de porosité accessible à l'eau constituant la phase aqueuse continue. Ces deux caractéristiques sont importantes afin de limiter l'augmentation de viscosité d'un fourrage contenant des solides en suspension comme les granules d'amidon.

La granulométrie des amidons natifs, qui est généralement comprise entre 2 µm et 100 µm, et plus généralement entre 5 µm et 45 µm, est également idéale pour une utilisation dans les fourrages constitués d'une phase aqueuse continue. Ainsi les amidons natifs ne comprennent ni trop de particules fines, ni trop de grosses particules. La présence de particules fines augmente la viscosité du fourrage et nécessite donc en général d'augmenter la teneur en matières grasses et/ou en eau. A l'inverse, la présence de grosses particules confère au fourrage une sensation sableuse dans la bouche. L'équilibre entre granules de petite taille et de grande taille peut, en tant que de besoin, être ajusté en fonction des textures et propriétés recherchées, en mélangeant, en différentes proportions, des amidons de différentes origines.

Parmi les amidons natifs, on préfère l'amidon de blé, car il présente une granulométrie idéale de 2 µm à 45 µm, et car il est bon marché.

Les amidons de maïs et de manioc font aussi partie des amidons préférés de par leur granulométrie.

D'autres avantages de l'amidon natif sont sa saveur neutre et sa couleur blanche, ce qui permet son utilisation dans une large gamme de produits, notamment des produits peu aromatiques, tels que les fourrages saveur vanille. Enfin, l'amidon natif est un ingrédient bon marché ; et il peut être employé sans broyage dans les fourrages constitués d'une phase aqueuse continue, ce qui permet un procédé de fabrication simplifié et une plus grande productivité.

Toutefois, il est également possible d'utiliser de l'amidon broyé afin d'obtenir des granulométries spécifiques qui ne sont pas ou difficilement accessibles sans broyage.

Outre l'amidon natif, on peut également utiliser conformément à l'invention des amidons surséchés, c'est-à-dire des amidons, non gélatinisés, dont la teneur en humidité a été amenée en dessous de leur humidité relative d'équilibre. On peut également envisager l'utilisation d'un mélange d'amidons natifs et d'amidons surséchés ou de différents types d'amidons surséchés.

L'amidon non gélatinisé est apporté sous forme d'une poudre d'amidon, mais il peut également être apporté en en partie sous forme d'une farine riche en amidon non gélatinisé ou d'un mélange de farines riches en amidon. L'utilisation d'une farine riche en amidon peut être avantageuse, notamment en termes de coût.

La poudre d'amidon modifie moins les caractéristiques du produit dans lequel elle est incorporée que la farine. Ainsi, la poudre d'amidon rend le produit la contenant moins collant que la farine grâce à l'absence de protéines. De plus, la poudre d'amidon présente une granulométrie plus fine que la farine car elle contient surtout des grains d'amidon isolés et non des cellules broyées comme la farine. Enfin, la poudre d'amidon possède un goût plus neutre et une couleur plus blanche que la farine.

La farine riche en amidon peut être une farine native ou surséchée. On peut par exemple utiliser des farines de céréale, telles que la farine de blé, la farine de maïs ou la farine de riz, ou des farines de tubercules, telles que la farine de pomme de terre. A titre d'exemple, on peut citer la farine de blé, qui peut être assimilée à un mélange de 12 % en poids de protéines, 83 % d'amidon à 13 % d'eau, de 1 % de matières grasses et de 4% de fibres.

La teneur en amidon du fourrage du produit de cuisson céréalier selon l'invention est de 4 à 40 %, de préférence de 4 à 26 %, et plus préférentiellement encore de 7 à 22, 10 à 22, 13 à 18 % en poids sec par rapport au poids du fourrage. L'amidon de blé contient généralement 13 % d'eau et 87 % d'amidon sec. L'emploi de 40 % d'amidon de blé apporte donc 34,8 % d'amidon sec.

Les grains d'amidons formant une suspension avec la phase aqueuse du fourrage, l'homme du métier choisira donc de préférence un petit seuil d'écoulement pour le fourrage selon l'invention pour éviter ou limiter la sédimentation des grains d'amidon. Cependant, dans certains cas la sédimentation des grains d'amidon peut être acceptée.

Le fourrage selon l'invention peut être une composition à saveur sucrée ou salée.

Les fourrages de produits de cuisson céréaliers selon l'invention ont une teneur en sucres de 0 à 50 %, de préférence de 10 à 40 %, et plus préférentiellement encore de 10 à 30, 10 à 25, 10 à 20 en poids par rapport au poids total du fourrage. Dans le cas des fourrages à saveur salée selon l'invention, la teneur en sucres est généralement de 0 % à 50 %, de préférence de 0 à 35 %, et plus préférentiellement encore de 0 à 25 %, et même de 5 à 25 % et plus particulièrement de 5 à 15 % en poids par rapport au poids total du fourrage. Les fourrages à saveur sucrée selon l'invention comprennent de préférence de 0 à 50 %, de préférence de 10 à 40 %, et plus préférentiellement de 10 à 30, 15 à 25, 15 à 20 % en poids par rapport au poids total du fourrage.

Au sens de la présente demande, le terme « sucres » au pluriel désigne les mono- et disaccharides apportés seuls ou via des ingrédients en contenant.

Dans un mode de réalisation avantageux, les fourrages selon l'invention ont une teneur en saccharose de 0 à 30 %, de préférence de 0 à 20 %, et plus préférentiellement encore de 0 à 15 et avantageusement 5 à 10% en poids par rapport au poids total du fourrage.

On peut également envisager des fourrages selon l'invention qui sont totalement dépourvus de saccharose, une saveur sucrée pouvant être apportée par du fructose et/ou des édulcorants tels que les polyols, des édulcorant intenses (par exemple l'aspartame ou l'acésulfame-K) ou leur mélanges.

Les fourrages selon l'invention peuvent en plus comprendre, entre autre, des émulsifiants, du sel, des arômes, des conservateurs, du cacao sous différentes formes (de préférence de la poudre de cacao dégraissée ou fortement dégraissée), des fruits entiers ou en morceaux, des fruits ou des légumes en purée, en morceaux ou en poudre, des coulis de fruits, des confitures, des noisettes ou d'autres fruits secs broyés, des céréales, des épices, des herbes, des fibres alimentaires solubles ou insolubles, des levures ou leurs extraits.

Les émulsifiants sont ceux habituellement utilisés dans le domaine des fourrages, notamment la lécithine, le phosphatide d'ammonium, le polyglycérol polyricinoléate (PGPR), les mono et diglycérides ou leurs mélanges.

Les arômes peuvent être des arômes naturels ou synthétiques. Parmi les arômes naturels on peut citer la vanille, le caramel, la cannelle et parmi les arômes synthétiques la vanilline et certains arômes imitant des fruits, tels que la fraise ou la framboise.

L'amidon natif apporte en général un certain taux de microorganismes, ce qui peut dégrader la qualité du fourrage, notamment sa stabilité. Ce risque de dégradation existe notamment faiblement chez les fourrages ayant une activité de l'eau (Aw) de 0,6 à 0,73, plus fortement pour les Aw de 0,74 à 0,80. Ce risque, bien connu de l'homme de l'art, dépend aussi du pH, de la température et de la durée de conservation. Afin d'éviter ce phénomène, on peut réfrigérer le produit et/ou, selon sa durée de vie, soit pasteuriser ou stériliser (par exemple par irradiation) l'amidon natif avant incorporation dans le fourrage du produit de cuisson céréalier, soit ajouter un conservateur au fourrage. Par « conservateurs », on entend des composés inhibant ou retardant la prolifération des microorganismes dans la composition, en particulier de levures et/ou moisissures et/ou bactéries. Les conservateurs pouvant être ajoutés aux produits de cuisson céréaliers comportant un fourrage selon l'invention sont ceux habituellement utilisés dans le domaine des compositions alimentaires et comprennent notamment l'acide sorbique et ses sels (E200 à E203), l'acide benzoïque et ses sels (E210 à E219), les sulfites et dérivés (E220 à E228), la natamycine, la nisine, le propionate de calcium et leurs mélanges.

De préférence, on utilisera un conservateur si l'Aw est supérieure à 0,72, et surtout supérieure à 0,80. Un exemple d'un conservateur préféré est le sorbate de potassium.

Les fourrages de produits de cuisson céréaliers selon l'invention peuvent être obtenus selon des procédés de fabrication classiques pour ces types de produits, qui sont bien connus de l'homme du métier. Les fourrages peuvent être légèrement aérés pendant la fabrication, notamment de façon à obtenir une densité de 650 g/l à 1100 g/l, de préférence de 750 g/l à 1000 g/l. Un fourrage non aéré a généralement une densité d'environ 1100 à 1300 g/l.

La gélatinisation de l'amidon est un phénomène bien connu de l'homme de l'art. Elle est caractérisée par un gonflement important des granules d'amidon par absorption d'eau et même leur éclatement si le chauffage est trop intense. Les conséquences immédiatement visibles sont une augmentation de viscosité et la "solubilisation" de l'amidon dans les milieux aqueux tandis que des granules non gélatinisés sont seulement dispersés en suspension. La « solubilisation » de l'amidon gélatinisé se traduit par la disparition du trouble lié à la dispersion des granules d'amidon non gélatinisés.

La gélatinisation se produit en présence d'eau au dessus d'une certaine température. C'est un phénomène rapide et franc, c'est-à-dire que la quasi totalité des granules d'un même amidon natif dans le même milieu gélifie à une température T +/- 3°C. Cette gélification est irréversible.

Mais la température de gélification d'un amidon natif est variable en fonction de la nature de l'amidon et de la composition du milieu alimentaire aqueux. Ainsi, la température de gélatinisation de l'amidon de manioc dans l'eau pure est de 70°C quelque soit par exemple la date de récolte, celle de l'amidon de pomme de terre est de 63°C, celle de l'amidon de maïs est de 76°C, celle de l'amidon de blé est de 82°C (méthode de mesure : température d'empesage d'une suspension à 8% d'amidon dans l'eau placée dans un viscoamylographe Brabender ; chauffage par double enveloppe à 1.5°C / minute). En ce qui concerne l'influence de la composition du milieu de gélatinisation, l'augmentation de la teneur en sucres ainsi que la diminution de l'eau augmentent la température de gélatinisation.

Ainsi, dans le cadre de la présente invention, la température de gélatinisation qui est à prendre en considération correspond à la température de gélatinisation de l'amidon natif utilisé dans le milieu alimentaire aqueux utilisé, et non dans l'eau pure.

Ainsi, afin de préserver l'amidon dans son état natif dans le fourrage selon l'invention, il est impératif de ne pas le chauffer au dessus de sa température de gélatinisation pendant la préparation du fourrage et/ou lors de son utilisation ultérieure. De préférence, lors de sa préparation et/ou ultérieurement, le fourrage selon l'invention est chauffée au maximum à une température qui est de 7°C inférieure à la température de gélification de l'amidon mis en oeuvre. Dans le cas où on met en oeuvre un mélange de différents amidons la température de gélification la plus basse est déterminante.

Par exemple, dans le cas de l'utilisation d'un fourrage selon l'invention pour fourrer un gâteau moelleux, le fourrage est de préférence introduit après la cuisson du gâteau pendant que le gâteau est encore chaud. La température du fourrage est choisie de façon à ce qu'elle ne dépasse pas la température de gélatinisation de l'amidon natif.

. Le terme « produit de cuisson céréalier » tel qu'utilisé dans la présente demande comprend les biscuits secs, les gaufrettes, les biscottes, les barres de céréales, les gâteaux moelleux, les beignets, les pâtisseries à base de pâte à choux.

Le produit de cuisson céréalier selon l'invention peut par exemple être un biscuit sec comportant au moins une couche de fourrage selon l'invention entre deux couches de biscuit sec.

Il peut également s'agir d'une gaufrette fourrée, dans laquelle au moins deux parties, de préférence deux feuilles de gaufrette sont séparées par une couche de fourrage selon l'invention. De préférence, la gaufrette fourrée comporte 2 à 4 feuilles de gaufrettes séparées les unes des autres par une couche de fourrage selon l'invention.

Le produit de cuisson céréalier selon l'invention peut également comprendre un fourrage selon l'invention déposé dans un biscuit creux, par exemple une tartelette ou une barquette.

De préférence, le produit de cuisson céréalier selon l'invention est un gâteau moelleux. Le gâteau moelleux peut par exemple comporter un coeur de fourrage selon l'invention, qui peut par exemple être introduit par injection. Le gâteau moelleux peut aussi être un gâteau roulé obtenu par tartinage d'un fourrage selon l'invention sur au moins une des surfaces du gâteau moelleux et puis roulage. Le gâteau moelleux peut aussi comporter au moins une couche de fourrage selon l'invention entre au moins deux couches de gâteau moelleux. Le gâteau moelleux peut aussi comporter au moins une couche de fourrage selon l'invention entre une couche de gâteau moelleux et une coque de chocolat ou imitation de chocolat.

Généralement, le produit de cuisson céréalier selon l'invention comporte de 16 % à 55 %, avantageusement de 20 % à 45 %, de préférence de 25 % à 35 %, et plus préférentiellement encore soit de 25 % à 30 % pour un avantage nutritionnel supplémentaire ou soit de 28 à 35% pour un avantage organoleptique supplémentaire, en poids de fourrage selon l'invention par rapport au poids total du produit fini.

Le produit de cuisson céréalier selon l'invention comprend avantageusement de 1.5 % à 25 % en poids de matières grasses par rapport au poids total du produit de cuisson céréalier, de préférence de 2 à 20 %, de façon encore plus préférable de 2 à 15% et même de 5 à 12 %.

Le produit de cuisson céréalier selon l'invention comprend avantageusement de 20 % à 63 % en poids de sucres par rapport au poids total du produit de cuisson céréalier, de préférence de 27 à 58 %, de façon encore plus préférable de 27 à 48 % et même de 35 à 46 %. Plus préférentiellement encore, il comprend de 18 % à 48 % en poids de sucres par rapport au poids total du produit de cuisson céréalier, de préférence de 18 à 38 %, de façon encore plus préférable de 18 à 28 % et même de 20 à 25 %.

Après emballage hermétique, les produits de cuisson céréaliers selon l'invention se conservent à une température comprise entre 15 et 25°C pendant au moins une semaine, de préférence pendant au moins un mois, si l'Aw du fourrage est de 0,5 à 0,8, de préférence de 0,65 à 0,75 et plus préférentiellement encore de 0,68 à 0,72.

Les exemples de réalisation suivants illustrent la présente invention, sans en limiter en aucune façon la portée.

### EXEMPLE 1 : Fourrage saveur chocolat

On prépare 2 fourrages saveur chocolat constitués d'une phase aqueuse continue, dont un fourrage témoin qui correspond à un fourrage classique sans amidon, et un fourrage selon l'invention. Les compositions respectives de ces fourrages sont indiquées dans le tableau 1 ci-après.

Les fourrages sont préparés de la façon suivante. On pèse tous les ingrédients qui se trouvent sous forme de poudres et on les mélange ensuite. Le chocolat est fondu à 40°C et on y ajoute l'huile de colza, la lécithine et, le cas échéant, le PGPR. La préparation au chocolat est ensuite mélangée jusqu'à une homogénéisation totale. Puis les liquides hydrosolubles sont homogénéisés à l'aide d'un disperseur Rayneri V.M.I Trimix TXR50 et les ingrédients qui se trouvent sous forme de poudres sont versés sur le mélange pendant l'agitation (vitesse d'agitation : 1000 à 3000 rpm) et l'agitation est encore maintenue pendant 5 minutes. Ensuite la préparation au chocolat homogénéisée et tempéré à 40°C est incorporée sous agitation dans le mélange liquides hydrosolubles/poudres jusqu'à obtention d'une homogénéisation parfaite. Les propriétés des fourrages ainsi obtenus sont indiquées dans le tableau 2 ci-après.

**Tableau 1**

| **Composition** | **Fourrage témoin (% en poids)** | **Fourrage selon l'invention (% en poids)** |
|---|---|---|
| Saccharose sous forme de sucre glace | 10,9 | - |
| Sirop de glucose 71 DE (39% mono et di-saccharides) | 32,0 | - |
| Dextrose monohydraté | - | 9.9 |
| Fructose | - | 9,0 |
| Huile de colza | 11,7 | 10,0 |
| Lécithine | - | 0,5 |
| Chocolat noir (52,65% de pâte de cacao, 39,95% de saccharose, 4% de poudre de cacao, 3% de beurre de cacao, lécithine, vanilline) | 20,0 | 20,0 |
| Amidon de blé natif à 13% d'eau | - | 18,4 |
| Maltodextrine 15DE | - | - |
| Glycérol | 2,5 | 5,0 |
| Poudre de lait écrémé | 7,4 | 7,4 |
| Poudre de lait entier | 5,7 | 5,7 |
| PGPR | - | 0,1 |
| Eau | 9,8 | 14,0 |
| **Total** | **100** | **100** |

**Tableau 2**

| | **Fourrage témoin** | **Fourrage selon l'invention** |
|---|---|---|
| % en poids de matières grasses | 19,83 | 18,73 |
| % en poids de sucres | 37,45 | 32,07 |
| % en poids d'eau | 16,45 | 18,00 |
| % en poids sec d'amidon natif | 0,98 | 16,98 |
| Activité de l'eau (Aw) | 0,72 +/- 0,02 | 0,73 +/- 0,02 |
| kcal totales / 100g | 415 | 400 |
| (kcal glucides complexe)/(kcal totales) (%) | 1 | 17 |

La teneur en sucres ainsi que la teneur en matières grasses du fourrage selon l'invention est sensiblement réduite par rapport au fourrage témoin.

Malgré la réduction en sucres et en matière grasse, le fourrage selon l'invention présente une saveur sucrée un peu plus faible, mais assez proche de celle du fourrage témoin. De plus, le goût chocolaté reste très proche du standard, de même que la texture en bouche (dureté, fondant, granulométrie, pâteux).

De plus, le fourrage selon l'invention présente un ratio (calories apportées par les glucides lentement digestibles)/(teneur totale en calories) qui augmente de 1 % à 17 % grâce à l'ajout d'amidon natif dans le fourrage selon l'invention.

### EXEMPLE 2 : Gâteaux moelleux fourrés saveur chocolat

Des gâteaux moelleux de 21 g sont cuits selon un procédé standard. Ces gâteaux moelleux connus de l'homme de l'art comprennent 13 % en poids de matières grasses, 61.8% en poids de glucides, dont 22,4% en poids de sucres (mono- et disaccharides, dont 17% de saccharose), 6.3% de protéines et 16.5 % d'eau.

Avec ces gâteaux moelleux, on prépare 2 lots de gâteaux moelleux fourrés, qui correspondent à des gâteaux moelleux fourrés saveur chocolat classique, dont un lot de gâteaux moelleux témoins comprenant le fourrage témoin de l'exemple 1, et un lot de gâteaux moelleux selon l'invention comprenant le fourrage selon l'invention de l'exemple 1.

Juste après leur cuisson, les gâteaux moelleux sont fourrés avec 9 g des fourrages respectifs (soit 30% de fourrage et 70% de gâteux moelleux) à l'aide d'un système d'injection à deux aiguilles. Le fourrage est injecté à une température de 28 à 35°C. Les gâteaux ainsi fourrés sont refroidis à 20°C.

Les gâteaux moelleux fourrés selon l'invention ont un aspect strictement identique au témoin, le goût de gâteau et sa texture moelleuse étant inchangés. Les gâteaux selon l'invention sont perçus comme très proches du témoin en termes d'odeur, de sucré, de texture du fourrage. Le fondant, la granulométrie et le pâteux sont très proches et n'ont pas été perçus comme significativement différents par un panel de consommateurs.

Après emballage hermétique, les gâteaux moelleux fourrés selon l'invention se conservent au moins pendant 4 mois à 22°C.

## Revendications

1. Produit de cuisson céréalier comportant un fourrage constitué d'une phase aqueuse continue, ledit fourrage ayant
une activité de l'eau (Aw) de 0,5 à 0,8 et
une teneur en matières grasses de moins de 25 % en poids par rapport au poids total du fourrage,
une teneur en sucres de 0 à 50% en poids par rapport au poids total du fourrage et
comprenant 4 à 40 % en poids par rapport au poids total du fourrage d'au moins une poudre d'amidon non gélatinisé natif ou surséché
ledit fourrage étant **caractérisé en ce que**
au moins 5%, de préférence au moins 10 %, et plus préférentiellement encore au moins 15 % des particules dudit amidon non gélatinisé ont une taille supérieure ou égale à 10 µm,
l'amidon non gélatinisé a, pour au moins 90 % des particules, une granulométrie comprise entre 2 µm et 100 µm, et
ledit amidon n'est pas chauffé au dessus de sa température de gélatinisation lors de l'utilisation ultérieure du fourrage.

2. Produit de cuisson céréalier selon la revendication 1, **caractérisé en ce que** la teneur en amidon est de 4 à 26 %, de préférence de 7 à 22 %, et plus préférentiellement de 10 à 22 % et de 13 à 18 % en poids sec par rapport au poids total du fourrage.

3. Produit de cuisson céréalier selon l'une quelconque des revendications 1 ou 2, **caractérisé en ce que** l'amidon a pour au moins 90 % des particules une granulométrie comprise entre 5 µm et 45 µm.

4. Produit de cuisson céréalier selon l'une quelconque des revendications 1 à 3, **caractérisé en ce que** l'amidon est choisi dans le groupe constitué par l'amidon de blé, l'amidon de riz, l'amidon de maïs, l'amidon de maïs waxy, l'amidon de sorgho, l'amidon de tapioca, l'amidon de pomme de terre, l'amidon de manioc et leurs mélanges.

5. Produit de cuisson céréalier selon l'une quelconque des revendications précédentes, **caractérisé en ce que** l'Aw est de 0,65 à 0,75 et plus préférentiellement de 0,68 à 0,72.

6. Produit de cuisson céréalier selon l'une quelconque des revendications précédentes, **caractérisé en ce que** la teneur en matière sèche est inférieure à 80 % en poids.

7. Produit de cuisson céréalier selon l'une quelconque des revendications précédentes, **caractérisé en ce que** la teneur en matières grasses est de 0 à 25 %, de préférence de 0 à 21 %, avantageusement 0 à 15, et de préférence 5 à 15% en poids par rapport au poids total du fourrage.

8. Produit de cuisson céréalier selon l'une quelconque des revendications précédentes, **caractérisé en ce que** la teneur en sucres est de 10 à 40, 10 à 30, 10 à 25 et avantageusement 10 à 20% en poids par rapport au poids total du fourrage.

9. Produit de cuisson céréalier selon l'une quelconque des revendications précédentes, **caractérisé en ce que** la teneur en saccharose est de 0 à 30 %, de préférence de 0 à 20 %, et plus préférentiellement encore de 0 à 15 et avantageusement 5 à 10% en poids par rapport au poids total du fourrage.

10. Produit de cuisson céréalier selon l'une quelconque des revendications précédentes, **caractérisé en ce qu'**il s'agit d'un biscuit sec comportant au moins une couche du fourrage entre deux couches de biscuit sec ou de gaufrette.

11. Produit de cuisson céréalier selon l'une quelconque des revendications précédentes, **caractérisé en ce que** le fourrage est déposé dans un biscuit creux.

12. Produit de cuisson céréalier selon l'une quelconque des revendications précédentes, **caractérisé en ce que** le produit de cuisson céréalier est un gâteau moelleux.

13. Produit de cuisson céréalier selon la revendication 12, **caractérisé en ce qu'**il s'agit d'un gâteau moelleux comportant un coeur de fourrage.

14. Produit de cuisson céréalier selon la revendication 12 **caractérisé en ce qu'**il s'agit d'un gâteau moelleux roulé obtenu par tartinage du fourrage sur au moins une des surface du gâteau moelleux et puis roulage.

15. Produit de cuisson céréalier selon la revendication 12, **caractérisé en ce qu'**il s'agit d'un gâteau moelleux comportant au moins une couche de fourrage entre au moins deux couches de gâteau moelleux.

16. Produit de cuisson céréalier selon la revendication 12, **caractérisé en ce qu'**il s'agit d'un gâteau moelleux comportant au moins une couche de fourrage entre un couche de gâteau moelleux et une coque de chocolat ou imitation de chocolat.

17. Produit de cuisson céréalier selon l'une quelconque des revendications précédentes, **caractérisé en ce qu'**il comporte 16 % à 55 %, avantageusement de 20 % à 45 %, de préférence de 25 % à 35 %, et plus préférentiellement encore soit de 25 % à 30 % pour un avantage nutritionnel supplémentaire ou soit de 28 à 35% pour un avantage organoleptique supplémentaire, en poids de fourrage selon l'invention par rapport au poids total du produit fini.

18. Produit de cuisson céréalier selon l'une quelconque des revendications précédentes, **caractérisé en ce qu'**il comprend de 1.5 % à 25 % en poids de matières grasses par rapport au poids total du produit de cuisson céréalier, de préférence de 2 à 20 %, de façon encore plus préférable de 2 à 15% et même de 5 à 12 %.

19. Produit de cuisson céréalier selon l'une quelconque des revendications précédentes, **caractérisé en ce qu'**il comprend de 20 % à 63 % en poids de sucres par rapport au poids total du produit de cuisson céréalier, de préférence de 27 à 58 %, de façon encore plus préférable de 27 à 48 % et même de 35 à 46 %.

## Claims

1. A cooked cereal product comprising a filling consisting of a continuous aqueous phase, said filling having
a water activity (Aw) from 0.5 to 0.8 and
a fat content of less than 25% by weight, based on the total weight of the filling,
a sugar content from 0 to 50% by weight, based on the total weight of the filling and
comprising 4 to 40% by weight based on the total weight of the filling, of at least one native or overdried non-gelatinized starch powder
said filling being **characterized in that**
at least 5%, preferably at least 10%, and still more preferentially at least 15% of the particles of said non-gelatinized starch have a size greater than or equal to 10 µm,
the non-gelatinized starch has, for at least 90% of the particles, a granulometry comprised between 2 µm and 100 µm, and
said starch is not heated above its gelatinization temperature during the subsequent use of the filling.

2. The cooked cereal product according to claim 1, **characterized in that** the starch content is from 4 to 26%, preferably from 7 to 22%, and more preferentially from 10 to 22% and from 13 to 18% by dry weight based on the total weight of the filling.

3. The cooked cereal product according to any of claims 1 or 2, **characterized in that** the starch has for at least 90% of the particles a granulometry comprised between 5 µm and 45 µm.

4. The cooked cereal product according to any of claims 1 to 3, **characterized in that** the starch is selected from the group consisting of wheat starch, rice starch, maize starch, waxy maize starch, sorghum starch, tapioca starch, potato starch, manioc starch and mixtures thereof.

5. The cooked cereal product according to any of the preceding claims, **characterized in that** Aw is from 0.65 to 0.75, and more preferentially from 0.68 to 0.72.

6. The cooked cereal product according to any of the preceding claims, **characterized in that** the dry material content is less than 80% by weight.

7. The cooked cereal product according to any of the preceding claims, **characterized in that** the fat content is from 0 to 25%, preferably from 0 to 21%, advantageously from 0 to 15, and preferably from 5 to 15% by weight, based on the total weight of the filling.

8. The cooked cereal product according to any of the preceding claims, **characterized in that** the sugar content is from 10 to 40, 10 to 30, 10 to 25 and advantageously 10 to 20% by weight, based on the total weight of the filling.

9. The cooked cereal product according to any of the preceding claims, **characterized in that** the saccharose content is from 0 to 30%, preferably from 0 to 20%, and still more preferentially from 0 to 15 and advantageously from 5 to 10% by weight, based on the total weight of the filling.

10. The cooked cereal product according to any of the preceding claims, **characterized in that** it is a dry biscuit comprising at least one filling layer between two layers of dry biscuit or wafer.

11. The cooked cereal product according to any of the preceding claims, **characterized in that** the filling is deposited in a hollow biscuit.

12. The cooked cereal product according to any of the preceding claims, **characterized in that** the cooked cereal product is a moist cake.

13. The cooked cereal product according to claim 12, **characterized in that** it is a moist cake comprising a filling core.

14. The cooked cereal product according to claim 12, **characterized in that** it is a rolled moist cake obtained by spreading the filling on at least one of the surfaces of the moist cake and then by rolling.

15. The cooked cereal product according to claim 12, **characterized in that** it is a moist cake comprising at least one filling layer between at least two moist cake layers.

16. The cooked cereal product according to claim 12, **characterized in that** it is a moist cake comprising at least one filling layer between a moist cake layer and a chocolate or chocolate imitation shell.

17. The cooked cereal product according to any of the preceding claims, **characterized in that** it comprises 16% to 55%, advantageously from 20% to 45%, preferably from 25% to 35%, and still more preferentially either from 25% to 30% for an additional nutritional benefit or either from 28 to 35% for an additional organoleptic benefit, by weight of filling according to the invention based on the total weight of the finished product.

18. The cooked cereal product according to any of the preceding claims, **characterized in that** it comprises from 1.5% to 25% by weight of fats, based on the total weight of the cooked cereal product, preferably from 2 to 20%, still more preferably from 2 to 15% and even from 5 to 12%.

19. The cooked cereal product according to any of the preceding claims, **characterized in that** it comprises from 20% to 63% by weight of sugars based on the total weight of the cooked cereal product, preferably from 27 to 58%, still more preferably from 27 to 48% and even from 35 to 46%.

## Patentansprüche

1. Getreidebackprodukt, umfassend eine Füllung, bestehend aus einer kontinuierlichen wässrigen Phase, wobei die Füllung
eine Wasseraktivität (Aw) von 0,5 bis 0,8 aufweist und
einen Fettgehalt von weniger als 25 Gewichts-% bezüglich des Gesamtgewichts der Füllung,
einen Zuckergehalt von 0 bis 50 Gewichts-% bezüglich des Gesamtgewichts der Füllung, und
umfassend 4 bis 40 Gewichts-% bezüglich des Gesamtgewichts der Füllung mindestens eines nichtgelierten Stärkepulvers, nativ oder übertrocknet,
wobei die Füllung **dadurch gekennzeichnet ist, dass**
mindestens 5 %, vorzugsweise mindestens 10 %, und noch mehr bevorzugt mindestens 15 % der Teilchen der nichtgelierten Stärke eine Größe von über oder gleich 10 µm aufweisen,
die nichtgelierte Stärke für mindestens 90 % der Teilchen eine Teilchengröße zwischen 2 µm und 100 µm aufweist,
die Stärke nicht erhitzt wird über ihre Gelatisierungstemperatur während der späteren Verwendung der Füllung.

2. Getreidebackprodukt nach Anspruch 1, **dadurch gekennzeichnet, dass** der Stärkegehalt von 4 bis 26 %, vorzugsweise von 7 bis 22 % und mehr bevorzugt 10 bis 22 % und von 13 bis 18 % bezüglich des Trockengewichts des Gesamtgewichts der Füllung ist.

3. Getreidebackprodukt nach einem der Ansprüche 1 oder 2, **dadurch gekennzeichnet, dass** die Stärke für mindestens 90 % der Teilchen eine Teilchengröße aufweist, die zwischen 5 µm und 45 µm umfasst.

4. Getreidebackprodukt nach einem der Ansprüche 1 bis 3, **dadurch gekennzeichnet, dass** die Stärke ausgewählt ist aus der Gruppe, bestehend aus Getreidestärke, Reisstärke, Maisstärke, wachsartiger Maisstärke, Sorghumstärke, Tapiokastärke, Kartoffelstärke, Maniokstärke und ihren Gemischen.

5. Getreidebackprodukt nach einem der vorhergehenden Ansprüche, **dadurch gekennzeichnet, dass** die Aw von 0,65 bis 0,75 und mehr bevorzugt von 0,68 bis 0,72 ist.

6. Getreidebackprodukt nach einem der vorhergehenden Ansprüche, **dadurch gekennzeichnet, dass** der Trockensubstanzgehalt geringer als 80 Gewichts-% ist.

7. Getreidebackprodukt nach einem der vorhergehenden Ansprüche, **dadurch gekennzeichnet, dass** der Fettgehalt von 0 bis 25 %, vorzugsweise von 0 bis 21 %, vorteilhafterweise von 0 bis 15 % und bevorzugt von 5 bis 15 % bezüglich des Gewichts, bezogen auf das Gesamtgewicht der Füllung ist.

8. Getreidebackprodukt nach einem der vorhergehenden Ansprüche, **dadurch gekennzeichnet, dass** der Zuckergehalt 10 bis 40, 10 bis 30, 10 bis 25 und vorteilhafterweise 10 bis 20 % bezüglich des Gewichts, bezogen auf des Gesamtgewichts der Füllung ist.

9. Getreidebackprodukt nach einem der vorhergehenden Ansprüche, **dadurch gekennzeichnet, dass** der Saccharosegehalt 0 bis 30 %, vorzugsweise 0 bis 20 % und noch bevorzugter 0 bis 15 % und vorteilhafterweise 5 bis 10 % bezüglich des Gewichts, bezogen auf das Gesamtgewicht der Füllung ist.

10. Getreidebackprodukt nach einem der vorhergehenden Ansprüche, **dadurch gekennzeichnet, dass** es sich um ein Trockenbackwerk handelt, das mindestens eine Füllungsschicht zwischen zwei Trockenbackwerk- oder Waffelschichten enthält.

11. Getreidebackprodukt nach einem der vorhergehenden Ansprüche, **dadurch gekennzeichnet, dass** die Füllung in einer Vertiefung des Backwerks angeordnet ist.

12. Getreidebackprodukt nach einem der vorhergehenden Ansprüche, **dadurch gekennzeichnet, dass** das Getreidebackprodukt ein weicher Kuchen ist.

13. Getreidebackprodukt nach Anspruch 12, **dadurch gekennzeichnet, dass** es sich um einen weichen Kuchen mit einem Füllungskern handelt.

14. Getreidebackprodukt nach Anspruch 12, **dadurch gekennzeichnet, dass** es sich um einen weichen gerollten Kuchen handelt, erhalten durch Streichen von Füllung auf mindestens eine Oberfläche des weichen Kuchens und dann Einrollen.

15. Getreidebackprodukt nach Anspruch 12, **dadurch gekennzeichnet, dass** es sich um einen weichen Kuchen handelt, der mindestens eine Füllungsschicht zwischen mindestens zwei Schichten aus weichem Kuchen umfasst.

16. Getreidebackprodukt nach Anspruch 12, **dadurch gekennzeichnet, dass** es sich um einen weichen Kuchen handelt, der mindestens eine Füllungsschicht zwischen einer weichen Kuchenschicht und einem Überzug aus Schokolade oder einem Schokoladenimitat umfasst.

17. Getreidebackprodukt nach einem der vorhergehenden Ansprüche, **dadurch gekennzeichnet, dass** es 16 % bis 55 %, vorteilhafterweise von 20 % bis 45 %, vorzugsweise von 25 % bis 35 %,und noch mehr bevorzugt von 25 % bis 30 % für einen vorteilhaften Ernährungszusatz oder von 28 bis 35 % für eine vorteilhafte ergänzende Organoleptik, bezüglich des Gewichts der Füllung der Erfindung umfasst, bezogen auf das Gesamtgewicht des fertigen Produkts.

18. Getreidebackprodukt nach einem der vorhergehenden Ansprüche, **dadurch gekennzeichnet, dass** es von 1,5 % bis 25 % bezüglich des Gewichts Fettgehalt bezüglich des Gesamtgewichts des Getreidebackprodukts, vorzugsweise von 2 bis 20 %, noch mehr bevorzugt von 2 bis 15 % und noch mehr 5 bis 12 % umfasst.

19. Getreidebackprodukt nach einem der vorhergehenden Ansprüche, **dadurch gekennzeichnet, dass** es von 20 % bis 63 % bezüglich des Gewichts Zucker bezüglich des Gesamtgewichts des Getreidebackprodukts, vorzugsweise von 27 bis 58 %, noch mehr bevorzugt von 27 bis 48 % und noch mehr 35 bis 46 % umfasst.
